(19) Europäisches Patentamt
European Patent Office
Office européen des brevets

(11) **EP 1 072 871 B1**

(12) **EUROPÄISCHE PATENTSCHRIFT**

(45) Veröffentlichungstag und Bekanntmachung des Hinweises auf die Patenterteilung:
**12.09.2007  Patentblatt 2007/37**

(51) Int Cl.:
*G01F 23/296* (2006.01)          *G01F 23/284* (2006.01)

(21) Anmeldenummer: **00114732.1**

(22) Anmeldetag: **08.07.2000**

(54) **Vorrichtung zur Bestimmung des Füllstands eines Füllguts in einem Behälter**

Device for measuring the filling level of a product in a container

Dispositif pour la mesure du niveau de remplissage d'un produit dans un réservoir

(84) Benannte Vertragsstaaten:
**DE FR GB IT**

(30) Priorität: **29.07.1999  DE 19935646**

(43) Veröffentlichungstag der Anmeldung:
**31.01.2001  Patentblatt 2001/05**

(73) Patentinhaber: **Endress + Hauser GmbH + Co. KG**
**79689 Maulburg (DE)**

(72) Erfinder: **Heidecke, Frank**
**79098 Freiburg (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
| | |
|---|---|
| **EP-A- 0 875 772** | **EP-A- 0 928 974** |
| **WO-A-98/36490** | **DE-A- 3 107 444** |
| **US-A- 5 898 308** | |

EP 1 072 871 B1

**Beschreibung**

Die Erfindung bezieht sich auf eine Vorrichtung zur Bestimmung des Füllstands eines Füllguts in einem Behälter mit einer Signalerzeugungs-/Sendeeinheit, die hochfrequente Signale mit einer vorgegebenen Sendewiederholfrequenz erzeugt und in Richtung der Oberfläche des Füllguts aussendet, wobei die hochfrequenten Signale an der Oberfläche des Füllguts reflektiert werden, mit einer Empfangseinheit, die die reflektierten Signale empfängt, mit einer Verzögerungsschaltung, die die hochfrequenten Signale in niederfrequente Signale transformiert, und mit einer Auswerteeinheit, die anhand der Laufzeit der Signale den Füllstand in dem Behälter bestimmt.

Verfahren zur Bestimmung des Füllstandes über die Laufzeit von Signalen nutzen die physikalische Gesetzmäßigkeit aus, wonach die Laufstrecke gleich dem Produkt aus Laufzeit und Ausbreitungsgeschwindigkeit ist. Im Falle der Füllstandsmessung entspricht die Laufstrecke dem doppelten Abstand zwischen Antenne und Oberfläche des Füllguts. Das eigentliche Nutzechosignal und dessen Laufzeit werden anhand der sog. Echofunktion bzw. der digitalen Hüllkurve bzw. des Niederfrequenzsignals bestimmt, wobei die Hüllkurve bzw. das Niederfrequenzsignal die Amplituden der Echosignale als Funktion des Abstandes 'Antenne - Oberfläche des Füllguts' wiedergibt. Der Füllstand selbst ergibt sich dann aus der Differenz zwischen dem bekannten Abstand der Antenne von dem Boden des Behälters und dem durch die Messung bestimmten Abstand der Oberfläche des Füllguts von der Antenne.

In der DE 31 07 444 A1 wird ein hochauflösendes Impulsradarverfahren beschrieben. Ein Generator erzeugt erste Mikrowellenpulse und strahlt sie über eine Antenne mit einer vorgegebenen Sendewiederholfrequenz in Richtung der Oberfläche des Füllguts aus. Ein weiterer Generator erzeugt Referenz-Mikrowellenpulse, die gleich den ersten Mikrowellenpulsen sind, sich von diesen jedoch in der Sendewiederholrate geringfügig unterscheiden. Das Echosignal und das Referenzsignal werden gemischt. Am Ausgang des Mischers steht ein Zwischenfrequenzsignal an. Das Zwischenfrequenzsignal hat den gleichen Verlauf wie das Echosignal, ist gegenüber diesem jedoch um einen Zeitverzögerungsfaktor gestreckt, der gleich einem Quotienten aus der Sendewiederholfrequenz und der Frequenzdifferenz zwischen den ersten Mikro-wellenpulsen und den Referenz-Mikrowellenpulsen ist. Bei einer Sendewiederholfrequenz von einigen Megahertz, einer Frequenzdifferenz von wenigen Hertz und einer Mikrowellenfrequenz von einigen Gigahertz liegt die Frequenz des Zwischenfrequenzsignals unterhalb von 100 kHz. Der Vorteil der Transformation auf die Zwischenfrequenz ist, daß relativ langsame und damit kostengünstige elektronische Bauteile zur Signalerfassung und/oder Signalauswertung verwendet werden können.

Die Zeitdehnung bzw. Zeitverzögerung mittels sequentieller Abtastung setzt voraus, daß die Zeitdifferenz zwischen zwei Abtastpunkten stets dieselbe ist. Bislang sind zwei Verfahren bekannt geworden, die zur Realisierung dieser Forderung geeignet sind: das Mischerprinzip und das Rampenprinzip, wobei das Rampenprinzip quantisiert und nur näherungsweise kontinuierlich arbeitet.

Beim Mischerprinzip erzeugen zwei Oszillatoren zwei Schwingungen mit geringfügig unterschiedlichen Frequenzen. Durch die geringfügige 'Verstimmung' der beiden Schwingungen entsteht eine linear mit jeder Periode ansteigende Phasenverschiebung, was einer linear ansteigenden Zeitverzögerung entspricht. Nachteil des Mischerprinizps ist einmal der relativ hohe Leistungsverbrauch, so daß hier die Energieversorgung mittels einer 4-20mA Stromschleife nur bei Meßraten von einem Meßwert pro Sekunde möglich ist. Desweiteren sind unverhältnismäßig hohe Anforderungen an die Hard- und Software zu stellen, um die äquidistante Zeitdifferenz zwischen den Abtastpunkten aufrechtzuerhalten. Das Mischerprinzip liefert eine vergleichsweise kleine Anzahl von Meßwerten pro Meter für die sequentielle Abtastung. Daraus ergibt sich eine geringe Meßempfindlichkeit für Messungen mit Mikrowellenpulsen.

Beim Rampenprinzip wird die von Abtastpunkt zu Abtastpunkt äquidistante Zeitdifferenz unter Zuhilfenahme eines RC-Gliedes erzeugt. Das RC-Glied wird von einer stufenförmigen oder linear ansteigenden Rampenspannung vorgespannt, erhält also einen gewissen Offset, und wird dann im Rhythmus der Sendewiederholfrequenz aufgeladen und entladen. Mit zunehmender Rampenspannung erhöht sich der Spannungsoffset in den RC-Gliedern, wodurch sich das Erreichen der Schaltschwelle in Abhängigkeit von der Höhe der Rampenspannung verzögert.

Beim Rampenprinzip ist der Zeitdehnungsfaktor maßgeblich von der Zeitkonstanten eines RC-Gliedes abhängig. Die Abhängigkeit des RC-Gliedes von der Temperatur wirkt sich schaltungstechnisch bedingt voll auf die Skalierung der Zeittransformation aus. Um dieses Problem annähernd zu beseitigen, ist es erforderlich, die temperaturbedingten Änderungen über einen Regelkreis zu kompensieren. Aber auch mit dieser Maßnahme verändert sich die Skalierung der Zeittransformation über die Temperatur derart, daß Anforderungen für hochgenaue Messungen nicht erfüllt werden. Nachteil des Rampenprinzips ist desweiteren der hohe Aufwand, der zur Erzeugung der Rampenspannung betrieben werden muß.

Der Erfindung liegt die Aufgabe zugrunde, eine hochgenaue und kostengünstige Verzögerungsschaltung vorzuschlagen.

Die Aufgabe wird gemäß einer ersten Alternative der erfindungsgemäßen Vorrichtung dadurch gelöst, daß die Verzögerungsschaltung aus folgenden Teilelementen besteht: einem ersten durch eine Zeitkonstante $\tau_1$ charakterisierten Teilelement, das im Takte der Sendewiederholfrequenz mit Pulsen beaufschlagt wird und das ein zeitlich nicht-lineares Ausgangssignal erzeugt, einem zweiten durch eine Zeitkonstante $\tau_2 \gg \tau_1$ charakterisierten Teilelement, das mit Pulsen beaufschlagt wird, deren Taktfrequenz kleiner ist als die Sendewiederholfrequenz, und das ein zeitlich nicht-lineares Ausgangssignal erzeugt, einem dritten Teilelement, das in jeder Periode der Sendewiederholfrequenz den Schnittpunkt zwischen dem Ausgangssignal des ersten Teilelements und dem Ausgangssignal des zweiten Teilelements detektiert und an die Auswerteeinheit weiterleitet.

Gemäß einer bevorzugten Weiterbildung der erfindungsgemäßen Vorrichtung ist eine Teilschaltung vorgesehen, die sicherstellt, daß die Pulse, die am Eingang des ersten Teilelements und des zweiten Teilelements anliegen, die gleiche Spannungshöhe und das gleiche Anstiegsverhalten aufweisen.

Eine vorteilhafte Ausgestaltung der erfindungsgemäßen Vorrichtung sieht vor, daß es sich bei dem ersten Teilelement und dem zweiten Teilelement um RC-Glieder handelt, die durch die Zeitkonstanten $\tau_1 = R_1 C_1$ und $\tau_2 = R_2 C_2$ charakterisiert sind. Insbesondere ist es dann möglich, jeden gewünschten Zeitdehnungsfaktor über die entsprechende Wahl der Zeitkonstanten zu realisieren. Obwohl an dieser Stelle und auch im nachfolgenden Beispiel die bevorzugte Ausgestaltung der erfindungsgemäßen Vorrichtung RC-Glieder verwendet, können selbstverständlich auch andere Schaltglieder mit exponentieller Kennlinie eingesetzt werden.

Übrigens zeigen auch beim erfindungsgemäßen Komparatorprinzip die RC-Glieder die unerwünschte Temperaturabhängigkeit. Allerdings wirkt sich diese hier weit weniger störend aus als im Falle des zuvor beschriebenen Rampenprinzips. Die Gründe hierfür sind die folgenden: Treten bei der erfindungsgemäßen Vorrichtung Temperaturänderungen auf, so driften beide RC-Glieder in dieselbe Richtung weg. Zudem wirkt sich infolge des Einsatzes des dritten Teilelements bzw. des Komparators lediglich die Differenz der beiden Temperaturdriften negativ aus. Hierdurch kommt es zu einer Selbstkompensation, so daß der Meßfehler gering bleibt. Folglich erübrigt sich ein zusätzlicher Regelkreis zur Kompensation der Temperaturdrift der RC-Glieder.

Der lineare Zusammenhang zwischen der Sendewiederholfrequenz und der von Periode zu Periode äquidistanten Zeitänderung läßt sich mathematisch auf einfache und damit auf besonders eindringliche Weise veranschaulichen. Sei das erste RC-Glied durch die Zeitkonstante $\tau_1 = R_1 C_1$ und das zweite RC-Glied durch die Zeitkonstante $\tau_2 = R_2 C_2$ charakterisiert. Am Eingang des ersten RC-Gliedes liegen Rechtecksignale mit der Sendewiederholfrequenz $f_1$ an, während am Eingang des zweiten RC-Gliedes Rechtecksignale mit der Frequenz $f_2$ eines Meßzyklus' anliegen, wobei $f_2 \ll f_1$ ist. Weiterhin wird der Spezialfall betrachtet, daß die Spannungssignale, die am ersten RC-Glied und am zweiten RC-Glied anliegen, die gleiche Spannungshöhe und das gleiche Anstiegsverhalten aufweisen.

Der zeitliche Verlauf des Antwortsignals $U_1(t)$ des ersten RC-Gliedes läßt sich dann durch die folgende Formel darstellen:

$$U_1(t) = U_o * (1 - \exp(-(t - n*T_1)/\tau_1)).$$

Das Antwortsignal $U_2(t)$, das am Ausgang des zweiten RC-Gliedes ansteht, lautet wie folgt:

$$U_2(t) = U_o * (1 - \exp(t/\tau_2)).$$

Hierbei kennzeichnet $U_o$ die maximale Spannungshöhe beider Rechteckpulse und T die Periode der hochfrequenten Spannungspulse mit der Sendewiederholfrequenz $f_1$. n ist eine ganze positive Zahl.

Zur Berechnung der Schnittpunkte der beiden Ausgangssignale werden die beiden Ausgangssignale $U_1(t)$, $U_2(t)$ gleichgesetzt. Weiterhin wird die folgende Berechnung unter der Voraussetzung durchgeführt, daß $U_o$ in beiden Fällen die gleiche Spannungshöhe aufweist. Unter dieser Voraussetzung kürzt sich $U_o$ bei Gleichsetzung der beiden Terme auf beiden Seiten des Gleichheitszeichens heraus. Als Ergebnis der Gleichsetzung beider Terme folgt:

$$(t - n * T_1)/\tau_1 = t/\tau_2.$$

Durch entsprechende Umformungen läßt sich die Zeitdehnung bzw. die Zeitverzögerung $\Delta t$ folgendermaßen darstellen:

$$\Delta t = n * T_1 * (\tau_2/(\tau_2 - \tau_1) - 1).$$

Das heißt aber nichts anderes, als daß die Zeitverzögerung t der erfindungsgemäßen Verzögerungsschaltung linear mit der Zeit zunimmt. Die Proportionalitätskonstante und damit der Grad der Verzögerung ist durch die Zeitkonstanten der RC-Glieder bestimmt und kann folglich beliebig auf den jeweiligen Anwendungsfall durch geeignete Wahl der Widerstände und Kondensatoren der RC-Glieder abgestimmt werden.

Die erfindungsgemäße Schaltung ist aus sehr wenigen Schaltungselementen aufgebaut; sie ist daher entsprechend kostengünstig. Darüber hinaus ist sie weitgehend unempfindlich gegenüber Änderungen der äußeren Parameter, wie etwa der Temperatur. Sie ist daher für genaue Füllstandsmessungen geeignet.

Um die Entladezeit des zweiten RC-Glieds herabzusetzen, ist dem zweiten RC-Glied ein elektronisches Bauteil, z. B. ein Widerstand, nachgeschaltet. Erreicht das Ausgangssignal des zweiten RC-Gliedes einen vorgegebenen Spannungswert, wird das RC-Glied über einen Schalter mit dem elektronischen Bauteil in Reihe geschaltet. Der Kondensator entlädt sich, wobei die Entladezeit in Abhängigkeit von dem zugeschalteten Widerstand optimiert werden kann.

Eine bevorzugte - da kostengünstige Ausgestaltung der erfindungsgemäßen Vorrichtung sieht vor, daß es sich bei dem dritten Teilelement um einen Komparator handelt. Es wird weiterhin vorgeschlagen, daß die Auswerteeinheit nur die Abtastpunkte zur Auswertung erhält, die durch die Schnittpunkte zwischen den Ausgangssignalen des ersten RC-Gliedes und des zweiten RC-Gliedes entstehen und die im linearen Arbeitsbereich des Komparators liegen. Es hat sich herausgestellt, daß übliche Komparatoren solange näherungsweise linear arbeiten, bis das zweite RC-Glied ca. 63% seiner maximalen Ladespannung erreicht hat. Für genaue Messungen wird ein Bereich von maximal ca. 40% der maximalen Ladespannung des zweiten RC-Gliedes bevorzugt.

Alternativ zur o. g. Begrenzung des Arbeitsbereichs des zweiten Bauelementes mit nicht-linearer Kennlinie sieht eine Weiterbildung der erfindungsgemäßen Vorrichtung eine Regelvorrichtung vor, die die Abtastfrequenz des Niederfrequenzsignals außerhalb des nicht-linearen Bereichs des Komparators linearisiert. Die Abtastzeitpunkte werden dann zeitlich so variiert, daß die Zeitverzögerung zwischen zwei aufeinanderfolgenden Abtastzeitpunkten wiederum linear ansteigt.

Die bereits an vorhergehender Stelle beschriebene Selbstkompensation bei Temperaturänderungen erfolgt in einer Vielzahl der Fälle unter der Voraussetzung, daß beide RC-Glieder, insbesondere die verwendeten Kondensatoren von gleicher Güte sind. RC-Glieder mit großer Zeitkonstante und hoher Güte sind allerdings relativ teuer. Daher sieht eine vorteilhafte Weiterbildung der erfindungsgemäßen Vorrichtung vor, daß die Zeitkonstante $\tau_2$ des zweiten RC-Gliedes mittels eines ersten Regelkreises auf einem konstanten Wert gehalten wird. Diese Ausgestaltung ermöglicht es, auch kostengünstige RC-Glieder relativ geringer Güte zu verwenden.

Eine weitere günstige Ausgestaltung der erfindungsgemäßen Vorrichtung, die besonders gut für hochgenaue Messungen geeignet ist, sieht einen zweiten Regelkreis vor, der die Zeitdehnung bzw. die Zeitverzögerung t auf einen konstanten Wert regelt.

Eine vorteilhafte Weiterbildung der erfindungsgemäßen Vorrichtung schlägt ein logisches Gatter vor, an dessen einem Eingang das periodische Signal mit der Taktfrequenz des Meßzyklus' anliegt und an dessen zweitem Eingang das Ausgangssignal des dritten Teilelements bzw. des Komparators anliegt. Bei dem logischen Gatter handelt es sich beispielsweise um ein AND-Gatter.

Gemäß einer bevorzugten Ausgestaltung der erfindungsgemäßen Vorrichtung handelt es sich bei der Sendewiederholfrequenz nicht um eine konstante Größe. Vielmehr wird die Abtastfrequenz variiert (→ Dithering), wodurch einerseits die Störfestigkeit der Vorrichtung erhöht und andererseits die Emission der Vorrichtung verringert wird. Die Erhöhung der Störfestigkeit wird dadurch erreicht, daß bei Verwendung eines aufgeweiteten Frequenzbereichs der Einfluß von engbandigen Störsignalen, die die Meßempfindlichkeit herabsetzen würden, verringert wird. Die Verringerung der Emission hat ihre Ursache darin, daß bei Nutzung eines aufgeweiteten Frequenzbereichs nicht mehr eine große Energiemenge in einem konzentrierten engbandigen Frequenzbereich abgestrahlt wird, sondern daß geringe Energiemengen über einen aufgeweiteten Frequenzbereich verteilt zur Verfügung gestellt werden. Verwiesen sei in diesem Zusammenhang auch auf die US-PS 5,523,760.

Gemäß einer vorteilhaften Weiterbildung der erfindungsgemäßen Vorrichtung ist die Sendewiederholfrequenz funktional abhängig von dem Abstand 'Antenne - Oberfläche des Füllguts' bzw. von dem Füllstand des Füllguts in dem Behälter. Diese Ausgestaltung wird insbesondere bevorzugt, wenn die Meßsignale nicht frei in Richtung der Oberfläche des Füllguts abgestrahlt, sondern über ein leitfähiges Element in das zu messende Füllgut hineingeführt werden. Insbesondere ist die funktionale Abhängigkeit der Sendewiederholfrequenz so optimiert, daß die vom jeweiligen Laufweg abhängige Dämpfung, die die Meßsignale erfahren, wenn sie an dem leitfähigen Element entlanggeführt werden, ausgeglichen wird. Infolge dieser Kompensation ist es möglich, eine vergleichbar hohe Meßdynamik über den gesamten Meßbereich sicherzustellen.

Die zuvor spezifizierte Aufgabe wird gemäß einer zweiten Alternative der erfindungsgemäßen Vorrichtung dadurch gelöst, daß die Verzögerungsschaltung aus folgenden Teilelementen besteht: einem ersten Teilelement, das im Takte der Sendewiederholfrequenz ein zeitlich lineares Ausgangssignal mit einer ersten Steigung $m_1$ erzeugt, einem zweiten Teilelement, das im Takt einer Taktfrequenz, die kleiner ist als die Sendewiederholfrequenz, ein zeitlich lineares Ausgangssignal mit einer zweiten Steigung $m_2$ erzeugt, wobei $m_1 \gg m_2$ ist, und einem dritten Teilelement, das in jeder Periode der Sendewiederholfrequenz den Schnittpunkt zwischen dem Ausgangssignal des ersten Teilelements und dem Ausgangssignal des zweiten Teilelements detektiert und an die Auswerteeinheit weiterleitet.

Eine bevorzugte Ausgestaltung der erfindungsgemäßen Vorrichtung sieht vor, daß es sich bei dem ersten Teilelement und dem zweiten Teilelement um zumindest einen Sägezahngenerator handelt; bei dem dritten Teilelement handelt es sich um einen Komparator. Erfindungsgemäß läßt sich die gewünschte Zeitverzögerung also sowohl über Bauelemente mit exponentieller als auch mit linearer Kennlinie umsetzen.

Die Erfindung wird anhand der nachfolgenden Zeichnungen näher erläutert. Es zeigt:

Fig. 1: eine schematische Darstellung einer Ausgestaltung der erfindungsgemäßen Vorrichtung,

Fig. 2: ein Blockschaltbild einer ersten Ausgestaltung der Verzögerungsschaltung,

Fig. 3: den Signalverlauf der wesentlichen in Fig. 2 dargestellten Schaltelemente,

Fig. 4: ein Blockschaltbild der erfindungsgemäßen Verzögerungsschaltung mit Regelung der Zeitkonstanten des RC-Gliedes,

Fig. 5: ein Blockschaltbild der erfindungsgemäßen Verzögerungsschaltung mit Regelung der Zeitdehnung bzw. Zeitverzögerung,

Fig. 6: ein Blockschaltbild einer zweiten Ausgestaltung der Verzögerungsschaltung und

Fig. 7: den Signalverlauf der wesentlichen in Fig. 4 dargestellten Schaltelemente.

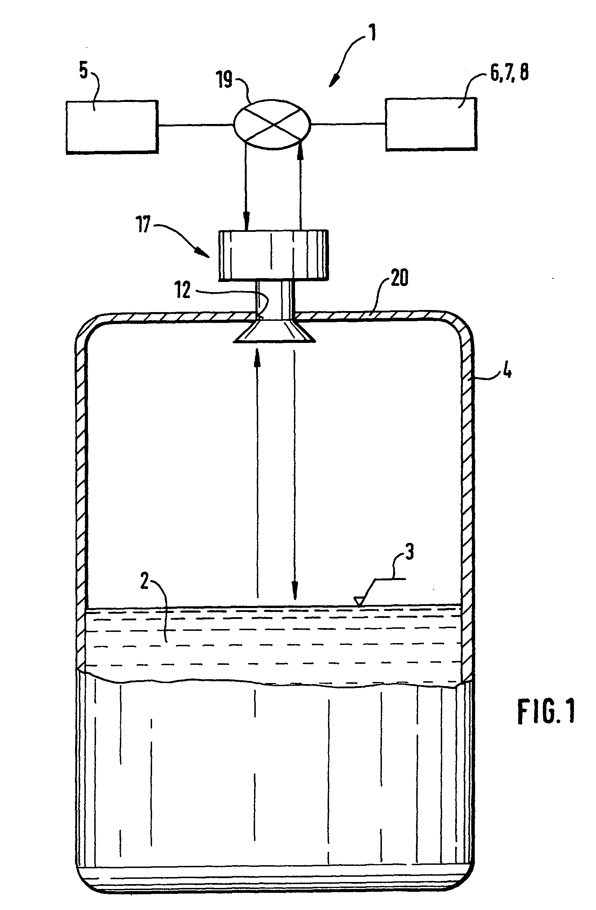

Fig. 1 zeigt eine schematische Darstellung einer Ausgestaltung der erfindungsgemäßen Vorrichtung. Ein Füllgut 2 ist in einem Behälter 4 gelagert. Zur Bestimmung des Füllstandes dient das Füllstandsmeßgerät 1, das in einer Öffnung 21 im Deckel 20 des Behälters 4 montiert ist. Über die Antenne 17 werden in der Signalerzeugungs-/Sendeeinheit 5 erzeugte Sendesignale, insbesondere Mikrowellen, in Richtung der Oberfläche 3 des Füllguts 2 abgestrahlt. An der Oberfläche 3 werden die gesendeten Signale als Echosignale teilweise reflektiert. Diese Echosignale werden in der Empfangs-/Auswerteeinheit 7, 8 empfangen und ausgewertet. In der Einheit 7, 8 ist im gezeigten Fall auch die Verzögerungsschaltung 6 integriert. Die korrekte Taktung von Absendung der Sendesignale und Empfang der Echosignale erfolgt über die Sende-Empfangsweiche 19.

Selbstverständlich ist die erfindungsgemäße Vorrichtung 1 nicht nur in Verbindung mit Antennen 17 einsetzbar, die die Meßsignale in den Freiraum abstrahlen. Bei einer Vielzahl von Einsatzgebieten, beispielsweise in der Petrochemie, Chemie und Lebensmittelindustrie, sind hochgenaue Messungen des Füllstandes von Flüssigkeiten oder Schüttgütern in Behältern (Tanks, Silos, usw.) gefordert. Deshalb kommen hier in zunehmendem Maße Meßgeräte zum Einsatz, bei denen kurze elektromagnetische Hochfrequenz-impulse oder kontinuierliche Mikrowellen in ein leitfähiges Element eingekoppelt und mittels des leitfähigen Elements in den Behälter, in dem das Füllgut gelagert ist, hineingeführt werden. Bei dem leitfähigen Element handelt es sich beispielsweise um eine Seilsonde oder um eine Stabsonde.

Physikalisch gesehen wird bei dieser Meßmethode der Effekt ausgenutzt, daß an der Grenzfläche zwischen zwei verschiedenen Medien, z. B. Luft und Öl oder Luft und Wasser, infolge der sprunghaften Änderung (Diskontinuität) der Dielektrizitätszahlen beider Medien ein Teil der geführten Hochfrequenz-Impulse bzw. der geführten Mikrowellen reflektiert und über das leitfähige Element zurück in die Empfangseinheit geleitet wird. Der reflektierte Anteil ist dabei um so größer, je größer der Unterschied in den Dielektrizitätszahlen der beiden Medien ist. Anhand der Laufzeit des reflektierten Anteils der Hochfrequenz-Impulse bzw. der Mikrowellen läßt sich die Entfernung zur Grenzfläche bestimmen. Bei Kenntnis der Leerdistanz des Behälters kann der Füllstand des Füllguts in dem Behälter berechnet werden. Eine entsprechende Vorrichtung wird beispielsweise in der US-PS 5,361,070 beschrieben. Dieses Verfahren ist übrigens unter dem Namen TDR (Time Domain Reflectrometry) bekannt.

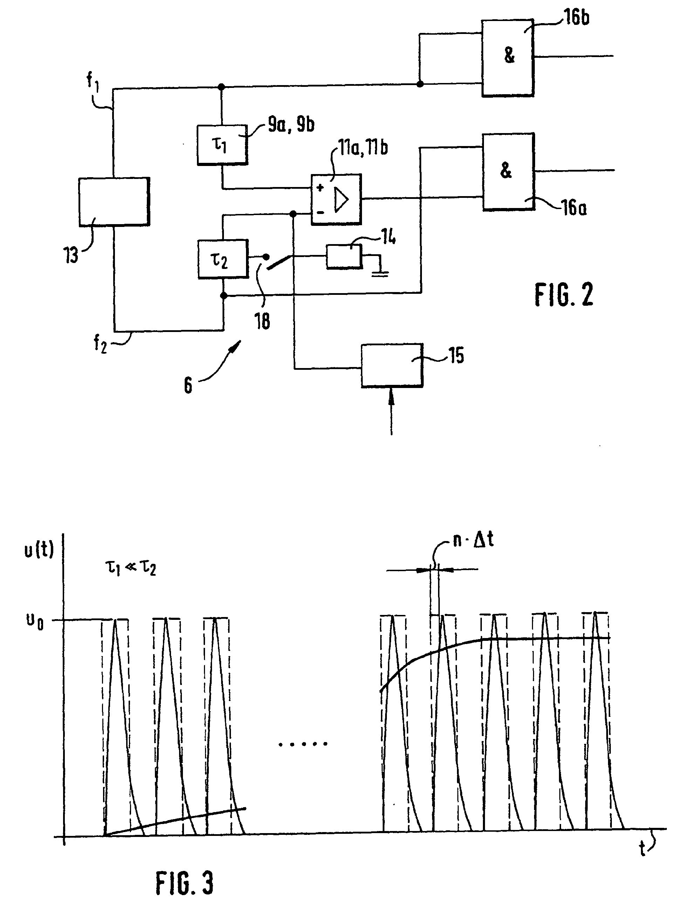

In Fig. 2 ist ein Blockschaltbild einer ersten Ausgestaltung der Verzögerungsschaltung 6 dargestellt. Die Rechteckpulse mit der Sendewiederholfrequenz $f_1$ und der Taktfrequenz $f_2$ für einen Meßzyklus werden von einem nicht dargestellten Rechteckgenerator erzeugt. Im einfachsten Fall handelt es sich dabei um eine Spannung mit einer vorgegebenen Spannungshöhe, die periodisch für definierte Zeiten an dem ersten RC-Glied 9b bzw. an dem zweiten RC-Glied 10b anliegt. Die bevorzugte Ausgestaltung der erfindungsgemäßen Vorrichtung 1, daß die Rechteckpulse in beiden Fällen die gleiche Spannungshöhe und das gleiche Anstiegsverhalten aufweisen, wird mittels der Teilschaltung 13 realisiert.

Die Ausgangssignale des ersten RC-Gliedes 9b und des zweiten RC-Gliedes liegen an den beiden Eingängen des Komparators 11b an. Dieser detektiert die 'Schnittpunkte' zwischen den beiden Ausgangssignalen der RC-Glieder 9b, 10b. Um die Entladezeit des zweiten RC-Gliedes 10b zu beschleunigen, ist dem zweiten RC-Glied 10b über einen Schalter 18 ein elektronisches Bauteil 14, vorzugsweise ein niederohmiger Widerstand, nachgeschaltet. Über die logischen Gatter 16a, 16b, im dargestellten Fall über AND-Gatter, werden die Sendepulse bzw. die Abtastpulse an die Auswerteeinheit 8 weitergeleitet.

Fig. 3 zeigen die Signalverläufe U(t) der wesentlichen in Fig. 2 dargestellten Schaltelemente. $U_o$ charakterisiert die Höhe der Spannungspulse, die an dem ersten RC-Glied 9b und dem zweiten RC-Glied 10b anliegen. Die Rechteckpulse mit der Sendewiederholfrequenz $f_1$ sind durch die gestrichelte Linie dargestellt. Die Antwortsignale des ersten RC-Gliedes 9b auf die Rechteckpulse mit der Sendewiederholfrequenz $f_1$ sind in der Fig. 3 gleichfalls dargestellt (durchgezogene Linie). Das Antwortsignal auf den am zweiten RC-Glied 10b anliegenden Rechteckpuls ist ebenfalls durch eine durchgezogene Linie dargestellt. Da die Zeitkonstante $\tau_2$ des zweiten RC-Gliedes 10b viel größer ist als die Zeitkonstante $\tau_1$ des ersten RC-Gliedes 9b steigt das Ausgangssignal des zweiten RC-Gliedes 10b langsam an, wobei sich beide Ausgangssignale in jeder Periode n der Sendewiederholfrequenz $f_1$ überschneiden. Die Verzögerungszeit $\Delta t$ zwischen der steigenden Flanke des Ausgangssignals des Komparators 11b und der Sendewiederholfrequenz $f_1$ nimmt kontinuierlich zu.

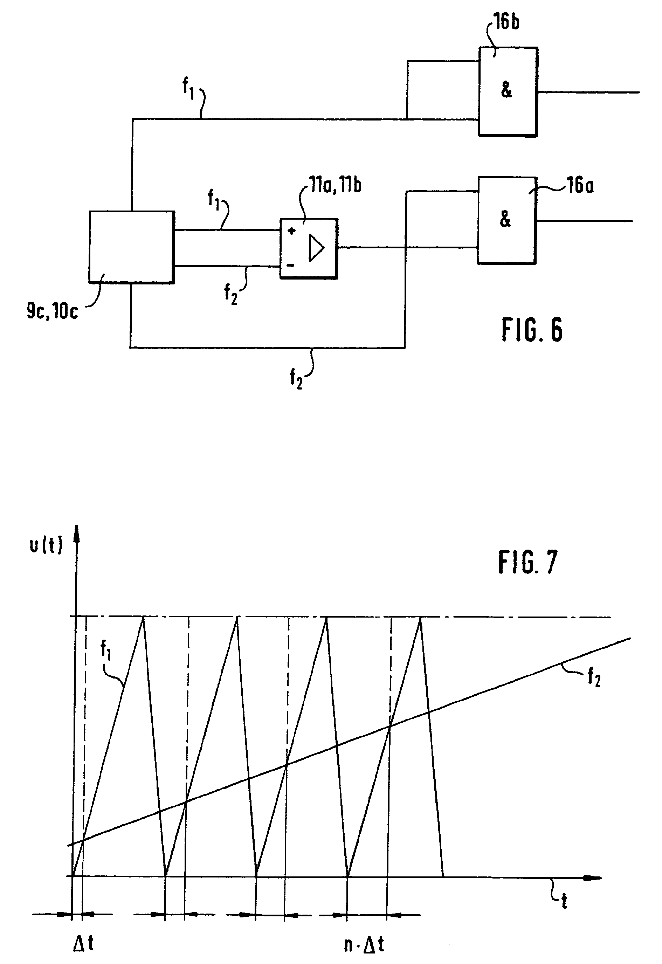

Ein analoges Ergebnis läßt sich erzielen, wenn die Schnittpunkte von zumindest zwei linearen Signalen mit unterschiedlichen Steigungen gesammelt und an die Auswerteeinheit 8 weitergeleitet werden. Ein Blockschaltbild dieser zweiten Ausgestaltung der Verzögerungsschaltung 6 ist in der Fig. 6 dargestellt. Die entsprechenden Signalverläufe sind in der Fig. 7 zu sehen.

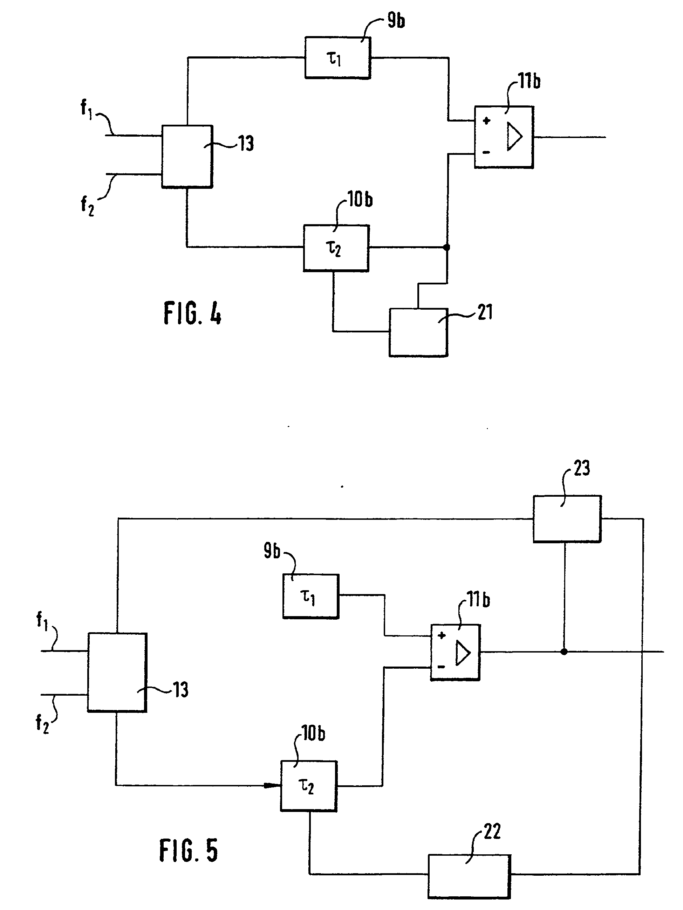

Fig. 4 zeigt ein Blockschaltbild der erfindungsgemäßen Verzögerungsschaltung 6 mit Regelung der Zeitkonstanten $\tau_2$ des RC-Gliedes 10b. Die Regelung der Zeitkonstanten $\tau_2$ erfolgt über den Regelkreis 21. Wie bereits an vorhergehender Stelle beschrieben, erlaubt diese Ausgestaltung den Einsatz von RC-Gliedern bzw. Kondensatoren mit geringerer Güte. Trotz der zusätzlichen Kosten für den Regelkreis ist die in Fig. 4 gezeigte Verzögerungsschaltung 6 im allgemeinen kostengünstiger zu realisieren, als wenn für das RC-Glied mit großer Zeitkonstante und das RC-Glied mit kleiner Zeitkonstante Elemente vergleichbar hoher Güte eingesetzt werden.

In Fig. 5 ist ein Blockschaltbild der erfindungsgemäßen Verzögerungsschaltung 6 mit Regelung der Zeitdehnungsfaktors $\Delta t$ zu sehen. Diese Schaltung ist für hochgenaue Messungen geeignet, da sie die Zeitverzögerung $\Delta t$ zwischen den Abtastpunkten auf einen konstanten vorgegebenen Wert regelt. Abgesehen von der zusätzlichen Regelschleife, die sich aus einem Phasendetektor 23 und einem Regelkreis 22 zusammensetzt, entspricht die Verzögerungsschaltung 6 den Schaltungen, die in den Figuren Fig. 2 und Fig. 3 dargestellt sind.

Zwecks Regelung werden das Ausgangssignal des Komparators 11b und die Rechtecksignale der Sendewiederholfrequenz $f_1$ auf die Eingänge des Phasendetektors 23 gegeben, der die Phasenverschiebung zwischen den beiden Signalen erkennt und als Spannungssignal an den Regelkreis 22 weiterleitet. Sobald Abweichungen zwischen der gemessenen Zeitdehnung $\Delta t$ und einer vorgegebenen Zeitdehnung $\Delta t_{SOLL}$ auftreten, werden diese über den Regelkreis 22 kompensiert.

## Bezugszeichenliste

| | |
|---|---|
| 1 | erfindungsgemäße Vorrichtung |
| 2 | Füllgut |
| 3 | Oberfläche des Füllguts |
| 4 | Behälter |
| 5 | Signalerzeugungs-/Sendeeinheit |
| 6 | Verzögerungsschaltung |
| 7 | Empfangseinheit |
| 8 | Auswerteeinheit |
| 9a | erstes Teilelement |
| 9b | erstes RC-Glied |
| 9c | Sägezahngenerator |
| 10a | zweites Teilelement |
| 10b | zweites RC-Glied |
| 10c | Sägezahngenerator |
| 11 a | drittes Teilelement |
| 11 b | Komparator |
| 12 | Öffnung im Deckel |
| 13 | Teilschaltung |
| 14 | elektronisches Bauteil |
| 15 | Regelschaltung |

| 16a | logisches Gatter |
| 16b | logisches Gatter |
| 17 | Antenne |
| 18 | Schalter |
| 19 | Sende-/Empfangsweiche |
| 20 | Deckel |
| 21 | erster Regelkreis |
| 22 | zweiter Regelkreis |
| 23 | Phasendetektor |
| $\Delta t$ | Zeitdehnung bzw. Zeitverzögerung |
| $\tau_1, \tau_2$ | Zeitkonstante |
| $m_1, m_2$ | Steigung |
| $R_1, R_2$ | Widerstand |
| $C_1, C_2$ | Kondensator |
| $f_1$ | Sendewiederholfrequenz |
| $f_2$ | Taktfrequenz eines Meßzyklus' |

**Patentansprüche**

1. Vorrichtung zur Bestimmung des Füllstands eines Füllguts (2) in einem Behälter (4) mit einer Signalerzeugungs-/ Sendeeinheit (5), die hochfrequente Signale mit einer vorgegebenen Sendewiederholfrequenz $f_1$ erzeugt und in Richtung der Oberfläche (3) des Füllguts (2) aussendet, wobei die hochfrequenten Signale an der Oberfläche (3) des Füllguts (2) reflektiert werden, mit einer Empfangseinheit (7), die die reflektierten Signale empfängt, mit einer Verzögerungsschaltung (6), die die hochfrequenten Signale in niederfrequente Signale transformiert, und mit einer Auswerteeinheit (8), die anhand der Laufzeit der Signale den Füllstand des Füllguts (2) in dem Behälter (4) bestimmt, **dadurch gekennzeichnet, daß** die Verzögerungsschaltung (6) aus folgenden Teilelementen besteht: einem ersten durch eine Zeitkonstanten $\tau_1$ charakterisierten Teilelement (9a), das im Takte der Sendewiederholfrequenz $f_1$ mit Pulsen beaufschlagt wird und das ein zeitlich nicht-lineares Ausgangssignal erzeugt, einem zweiten durch eine Zeitkonstante $\tau_2 \gg \tau_1$ charakterisierten Teilelement (10a), das mit Pulsen beaufschlagt wird, deren Taktfrequenz $f_2$ kleiner ist als die Sendewiederholfrequenz $f_1$, und das ein zeitlich nicht-lineares Ausgangssignal erzeugt, einem dritten Teilelement (11a), das in jeder Periode der Sendewiederholfrequenz $f_1$ den Schnittpunkt zwischen dem Ausgangssignal des ersten Teilelements (9a) und dem Ausgangssignalen des zweiten Teilelements (10a) detektiert und an die Auswerteeinheit (8) weiterleitet.

2. Vorrichtung nach Anspruch 1,
   **dadurch gekennzeichnet, daß** eine Teilschaltung (13) vorgesehen ist, die sicherstellt, daß die Pulse, die am Eingang des ersten Teilelements (9a) und des zweiten Teilelements (10a) anliegen, die gleiche Spannungshöhe und das gleiche Anstiegsverhalten aufweisen.

3. Vorrichtung nach Anspruch 1 oder 2,
   **dadurch gekennzeichnet, daß** es bei dem ersten Teilelement (9a) und zweiten Teilelement (10a) um RC-Glieder (9b, 10b) handelt, die durch die Zeitkonstanten $\tau_1 = R_1 C_1$ und $\tau_2 = R_2 C_2$ charakterisiert sind.

4. Vorrichtung nach Anspruch 1 oder 3,
   **dadurch gekennzeichnet, daß** die Zeitkonstanten des ersten Teilelements (9a; 9b) und des zweiten Teilelements (10a; 10b) so gewählt sind, daß der Quotient aus der Zeitkonstanten $\tau_2$ und der Zeitkonstanten $\tau_1$ dem gewünschten Zeitverzögerungsfaktor entspricht.

5. Vorrichtung nach Anspruch 3 oder 4,
   **dadurch gekennzeichnet, daß** dem zweiten Teilelement (10a) bzw. dem zweiten RC-Glied (10b) ein elektronisches Bauteil (14) nachgeschaltet ist, über das die Entladezeit des Kondensators ($C_2$) reduziert wird.

**6.** Vorrichtung nach Anspruch 2, 3 oder 4,
**dadurch gekennzeichnet,**
**daß** es sich bei dem dritten Teilelement (11a) um einen Komparator (11b) handelt.

**7.** Vorrichtung nach Anspruch 1 oder 6,
**dadurch gekennzeichnet,**
**daß** ein logisches Gatter (16) vorgesehen ist, an dessen einem Eingang das periodische Signal mit der Taktfrequenz $f_2$ anliegt und an dessen zweitem Eingang das Ausgangssignal des dritten Teilelements (11a) bzw. des Komparators (11b) anliegt.

**8.** Vorrichtung nach Anspruch 6,
**dadurch gekennzeichnet,**
**daß** die Auswerteeinheit (8) nur die Abtastpunkte zur Auswertung heranzieht, die im linearen Bereich des Komparators (11b) liegen.

**9.** Vorrichtung nach Anspruch 6,
**dadurch gekennzeichnet,**
**daß** eine Regelschaltung (15) vorgesehen ist, die die Abtastfrequenz des Niederfrequenzsignals außerhalb des nicht-linearen Arbeitsbereiches des Komparators (11b) derart regelt, daß die Zeitskalierung insgesamt wieder linear ist.

**10.** Vorrichtung nach Anspruch 1 oder 9,
**dadurch gekennzeichnet,**
**daß** ein erster Regelkreis (21) vorgesehen ist, der die Zeitkonstante $\tau_2$ des zweiten Teilelements (10a; 10b) auf einen konstanten Wert regelt.

**11.** Vorrichtung nach Anspruch 1, 9 oder 10,
**dadurch gekennzeichnet,**
**daß** ein Regelkreis (22) vorgesehen ist, der den Zeitdehnungsfaktor ($\Delta$ t) auf einen konstanten Wert regelt.

**12.** Vorrichtung nach Anspruch 1,
**dadurch gekennzeichnet,**
**daß** die Sendewiederholfrequenz $f_1$ eine variable Größe ist.

**13.** Vorrichtung nach Anspruch 12,
**dadurch gekennzeichnet,**
**daß** die Sendewiederholfrequenz $f_1$ eine Funktion des Abstandes 'Antenne (17) - Oberfläche (3) des Füllguts (2)' ist.

**14.** Vorrichtung zur Bestimmung des Füllstands eines Füllguts (2) in einem Behälter (4) mit einer Signalerzeugungs-/Sendeeinheit (5), die hochfrequente Signale mit einer vorgegebenen Sendewiederholfrequenz $f_1$ erzeugt und in Richtung der Oberfläche (3) des Füllguts (2) aussendet, wobei die hochfrequenten Signale an der Oberfläche (3) des Füllguts (2) reflektiert werden, mit einer Empfangseinheit (7), die die reflektierten Signale empfängt, mit einer Verzögerungsschaltung (6), die die hochfrequenten Signale in niederfrequente Signale transformiert, und mit einer Auswerteeinheit (8), die anhand der Laufzeit der Signale den Füllstand des Füllguts (2) in dem Behälter (4) bestimmt,
**dadurch gekennzeichnet,**
**daß** die Verzögerungsschaltung (6) aus folgenden Teilelementen besteht: einem ersten Teilelement (9a), das im Takte der Sendewiederholfrequenz $f_1$ ein zeitlich lineares Ausgangssignal mit einer ersten Steigung $m_1$ erzeugt, einem zweiten Teilelement (10a), das im Takt einer Taktfrequenz $f_2$, die kleiner ist als die Sendewiederholfrequenz $f_1$, ein zeitlich lineares Ausgangssignal mit einer zweiten Steigung $m_2 \ll m_1$ erzeugt, und einem dritten Teilelement (11a), das in jeder Periode der Sendewiederholfrequenz $f_1$ den Schnittpunkt zwischen dem Ausgangssignal des ersten Teilelements (9a) und dem Ausgangssignal des zweiten Teilelements (10a) detektiert und an die Auswerteeinheit (8) weiterleitet.

**15.** Vorrichtung nach Anspruch 14,
**dadurch gekennzeichnet,**
**daß** es sich bei dem ersten Teilelement (9a) und dem zweiten Teilelement (10a) um zumindest einen Sägezahngenerator (9c, 10c) handelt und daß es sich bei dem dritten Teilelement (11a) um einen Komparator (11b) handelt.

**Claims**

1. Apparatus for the determination of the filling level of a filling material (2) in a container (4) having a signal generating/ transmitting unit (5) which generates high-frequency signals with a predetermined transmission repetition frequency $f_1$ and transmits them in the direction of the surface (3) of the filling material (2), the high-frequency signals being reflected at the surface (3) of the filling material (2), having a receiving unit (7) which receives the reflected signals, having a delay circuit (6) which transforms the high-frequency signals into low-frequency signals, and having an evaluating unit (8) which determines the filling level of the filling material (2) in the container (4) with the aid of the transit time of the signals,
   **characterised**
   **in that** the delay circuit (6) comprises the following subelements:

   a first subelement (9a) which is **characterised by** a time constant $\tau_1$, is supplied with pulses in step with the transmission repetition frequency $f_1$ and generates a temporally non-linear output signal,
   a second subelement (10a) which is **characterised by** a time constant $\tau_2 \gg \tau_1$, is supplied with pulses with a clock frequency $f_2$ less than the transmission repetition frequency $f_1$ and generates a temporally non-linear output signal,
   a third subelement (11a) which detects in each period of the transmission repetition frequency $f_1$ the intersection of the output signal of the first subelement (9a) and the output signal of the second subelement (10a) and passes it on to the evaluating unit (8).

2. Apparatus according to Claim 1,
   **characterised**
   **in that** a subcircuit (13) is provided, which ensures that the pulses present at the input of the first subelement (9a) and the second subelement (10a) have the same voltage level and the same rise behaviour.

3. Apparatus according to Claim 1 or 2
   **characterised**
   **in that** the first subelement (9a) and the second subelement (10a) are RC elements (9b, 10b) which are **characterised by** the time constants $\tau_1 = R_1 C_1$ and $\tau_2 = R_2 C_2$.

4. Apparatus according to Claim 1 or 3
   **characterised**
   **in that** the time constants of the first subelement (9a; 9b) and the second subelement (10a; 10b) are chosen so that the quotient of the time constant $\tau_2$ and the time constant $\tau_1$ corresponds to the desired time delay factor.

5. Apparatus according to Claim 3 or 4,
   **characterised**
   **in that** an electronic component (14) is connected downstream of the second subelement (10a) or the second RC element (10b), via which component the discharging time of the capacitor ($C_2$) is reduced.

6. Apparatus according to Claim 2, 3 or 4,
   **characterised**
   **in that** the third subelement (11a) is a comparator (11b).

7. Apparatus according to Claim 1 or 6,
   **characterised**
   **in that** a logic gate (16) is provided, at the first input of which the periodic signal with the clock frequency $f_2$ is present and at the second input of which the output signal of the third subelement (11a) or the comparator (11b) is present.

8. Apparatus according to Claim 6,
   **characterised**
   **in that** the evaluating unit (8) uses the sampling points which lie in the linear range of the comparator (11b), for the evaluation.

9. Apparatus according to Claim 6,
   **characterised**
   **in that** a control circuit (15) is provided, which controls the sampling frequency of the low-frequency signal outside the non-linear operating range of the comparator (11b) in such a way that the time scaling as a whole is linear again.

10. Apparatus according to Claim 1 or 9,
    **characterised**
    **in that** a first control circuit (21) is provided, which adjusts the time constant $\tau_2$ of the second subelement (10a: 10b) to a constant value.

11. Apparatus according to Claim 1, 9 or 10,
    **characterised**
    **in that** a control circuit (22) is provided, which adjusts the time extension factor ($\Delta t$) to a constant value.

12. Apparatus according to Claim 1,
    **characterised**
    **in that** the transmission repetition frequency $f_1$ is a variable quantity.

13. Apparatus according to Claim 12,
    **characterised**
    **in that** the transmission repetition frequency $f_1$ is a function of the distance from the antenna (17) to the surface (3) of the filling material (2).

14. Apparatus for the determination of the filling level of a filling material (2) in a container (4) having a signal generating/ transmitting unit (5) which generates high-frequency signals with a predetermined transmission repetition frequency $f_1$ and transmits them in the direction of the surface (3) of the filling material (2), the high-frequency signals being reflected at the surface (3) of the filling material (2), having a receiving unit (7) which receives the reflected signals, having a delay circuit (6) which transforms the high-frequency signals into low-frequency signals, and having an evaluating unit (8) which determines the filling level of the filling material (2) in the container (4) with the aid of the transit time of the signals,
    **characterised**
    **in that** the delay circuit (6) comprises the following subelements:

    a first subelement (9a) which generates a temporally linear output signal with a first slope $m_1$ in step with the transmission repetition frequency $f_1$,
    a second subelement (10a) which generates a temporally linear output signal with a second slope $m_2 << m_1$ in step with a clock frequency $f_2$ which is less than the transmission repetition frequency $f_1$, and
    a third subelement (11a) which detects in each period of the transmission repetition frequency $f_1$ the intersection of the output signal of the first subelement (9a) and the output signal of the second subelement (10a) and passes it on to the evaluating unit (8).

15. Apparatus according to Claim 14,
    **characterised**
    **in that** the first subelement (9a) and the second subelement (10a) are at least one sawtooth generator (9c, 10c) and
    **in that** the third subelement (11a) is a comparator (11b).

**Revendications**

1. Dispositif destiné à la détermination du niveau d'un produit (2) au sein d'un réservoir (4), muni d'une unité de génération des signaux / d'émission (5), qui génère des signaux haute fréquence avec une fréquence de répétition d'émission $f_1$ prédéfinie et les émet en direction de la surface (3) du produit (2), les signaux haute fréquence étant réfléchis à la surface (3) du produit (2) ; muni d'une unité de réception (7), qui reçoit les signaux réfléchis ; muni d'un circuit retardateur (6), qui transforme les signaux haute fréquence en signaux basse fréquence ; et muni d'une unité d'exploitation (8), qui détermine le niveau du produit (2) dans le réservoir (4) à l'aide du temps de propagation des signaux,
   **caractérisé en ce**
   **que** le circuit retardateur (6) est composé des sous-éléments suivants :

   un premier sous-élément (9a) **caractérisé par** une constante de temps $T_1$, qui est soumis à des impulsions synchronisées à la fréquence de répétition d'émission $f_1$ et qui génère un signal de sortie non linéaire dans le temps,

un deuxième sous-élément (10a) **caractérisé par** une constante de temps $\tau_2 \gg \tau_1$, qui est soumis à des impulsions, dont la fréquence est inférieure à la fréquence de répétition d'émission $f_1$ et qui génère un signal de sortie non linéaire dans le temps,

un troisième sous-élément (11a), qui détecte dans chaque période de la fréquence de répétition d'émission $f_1$ le point d'intersection entre le signal de sortie du premier sous-élément (9a) et le signal de sortie du deuxième sous-élément (10a), et le transmet à l'unité d'exploitation (8).

**2.** Dispositif selon la revendication 1,
  **caractérisé en ce**
  **qu'**est prévu un sous-circuit (13), qui garantit que les impulsions, qui sont présentes à l'entrée du premier sous-élément (9a) et à l'entrée du deuxième sous-élément (10a), présentent le même niveau de tension et le même comportement de croissance.

**3.** Dispositif selon la revendication 1 ou 2,
  **caractérisé en ce**
  **que**, concernant le premier sous-élément (9a) et le deuxième sous-élément (10a), il s'agit de circuits RC (9b, 10b), qui sont **caractérisés par** les constantes de temps $T_1 = R_1C_1$ et $T_2 = R_2C_2$

**4.** Dispositif selon la revendication 1 ou 3,
  **caractérisé en ce**
  **que** les constantes de temps du premier sous-élément (9a, 9b) et du deuxième sous-élément (10a, 10b) sont choisies de telle manière que le quotient des constantes de temps $T_2$ et des constantes de temps $T_1$ corresponde au facteur de temporisation souhaité.

**5.** Dispositif selon la revendication 3 ou 4,
  **caractérisé en ce**
  **qu'**un composant électronique (14) est couplé en aval du deuxième sous-élément (10a) ou du deuxième circuit RC (10b), composant par le biais duquel le temps de décharge du condensateur ($C_2$) est réduit.

**6.** Dispositif selon la revendication 2, 3 ou 4,
  **caractérisé en ce**
  **que**, concernant le troisième sous-élément (11 a), il s'agit d'un comparateur (11b).

**7.** Dispositif selon la revendication 1 ou 6,
  **caractérisé en ce**
  **qu'**est prévu une porte logique (16), à une première entrée de laquelle est appliqué le signal périodique avec la fréquence d'impulsions $f_2$ et, à la deuxième entrée de laquelle est appliqué le signal de sortie du troisième sous-élément (11 a) ou du comparateur (11 b).

**8.** Dispositif selon la revendication 6,
  **caractérisé en ce**
  **que** l'unité d'exploitation (8) ne se sert que des points d'échantillonnage, qui se situent dans la zone linéaire du comparateur (11b).

**9.** Dispositif selon la revendication 6,
  **caractérisé en ce**
  **qu'**est prévu un circuit de régulation (15), qui régule la fréquence d'échantillonnage du signal basse fréquence en dehors de la zone de travail non linéaire du comparateur (11 b), de telle manière que l'échelle de temps est de nouveau globalement linéaire.

**10.** Dispositif selon la revendication 1 ou 9,
  **caractérisé en ce**
  **qu'**est prévu un premier circuit de régulation (21), qui régule la constante de temps $T_2$ du deuxième sous-élément (10a, 10b) à une valeur constante.

**11.** Dispositif selon la revendication 1, 9 ou 10,
  **caractérisé en ce**

**qu'**est prévu un deuxième circuit de régulation (22), qui régule le facteur de dilatation temporelle ($\Delta$t) à une valeur constante.

**12.** Dispositif selon la revendication 1,
**caractérisé en ce**
**que** la fréquence de répétition d'émission $f_1$ est une grandeur variable.

**13.** Dispositif selon la revendication 12,
**caractérisé en ce**
**que** la fréquence de répétition d'émission $f_1$ est une fonction de la distance "antenne (17) - surface (3) du produit (2)".

**14.** Dispositif destiné à la détermination du niveau d'un produit (2) au sein d'un réservoir (4), muni d'une unité de génération des signaux / d'émission (5), qui génère des signaux haute fréquence avec une fréquence de répétition d'émission $f_1$ prédéfinie et les émet en direction de la surface (3) du produit (2), les signaux haute fréquence étant réfléchis à la surface (3) du produit (2) ; muni d'une unité de réception (7), qui reçoit les signaux réfléchis ; muni d'un circuit retardateur (6), qui transforme les signaux haute fréquence en signaux basse fréquence ; et muni d'une unité d'exploitation (8), qui détermine le niveau du produit (2) dans le réservoir (4) à l'aide du temps de propagation des signaux,
**caractérisé en ce**
**que** le circuit retardateur (6) est composé des sous-éléments suivants :

un premier sous-élément (9a), qui génère à la fréquence de répétition d'émission $f_1$ un signal de sortie linéaire dans le temps avec une première pente $m_1$,
un deuxième sous-élément (10a), qui génère à la fréquence d'impulsions $f_2$, laquelle est inférieure à la fréquence de répétition d'émission $f_1$, un signal de sortie linéaire dans le temps avec une deuxième pente $m_2 \ll m_1$ et
un troisième sous-élément (11a), qui détecte dans chaque période de la fréquence de répétition d'émission $f_1$ le point d'intersection entre le signal de sortie du premier sous-élément (9a) et le signal de sortie du deuxième sous-élément (10a), et le transmet à l'unité d'exploitation (8).

**15.** Dispositif selon la revendication 14,
**caractérisé en ce**
**que**, concernant le premier sous-élément (9a) et le deuxième sous-élément (10a), il s'agit au minimum d'un générateur d'impulsions en dents de scie (9c, 10c) et que, concernant le troisième sous-élément (11a), il d'agit d'un comparateur (11b).

FIG.1

FIG. 2

$\tau_1 \ll \tau_2$

$n \cdot \Delta t$

$u(t)$

$u_0$

$t$

FIG. 3

FIG. 4

FIG. 5

FIG. 6

FIG. 7

**EP 1 072 871 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3107444 A1
- US 5523760 A
- US 5361070 A